Europäisches Patentamt

European Patent Office

Office européen des brevets

(19)

(11) **EP 1 034 593 B1**

(12) **EUROPEAN PATENT SPECIFICATION**

(45) Date of publication and mention
of the grant of the patent:
**24.09.2003 Bulletin 2003/39**

(21) Application number: **98965205.2**

(22) Date of filing: **30.11.1998**

(51) Int Cl.$^7$: **H02J 3/06**, H02K 3/40

(86) International application number:
**PCT/EP98/07744**

(87) International publication number:
**WO 99/029008 (10.06.1999 Gazette 1999/23)**

(54) **POWER FLOW CONTROL**

LEISTUNGSFLUSSSTEUERUNG

REGULATION DE FLUX DE COURANT

(84) Designated Contracting States:
**CH DE FI FR GB IT LI SE**

(30) Priority: **28.11.1997 GB 9725339**

(43) Date of publication of application:
**13.09.2000 Bulletin 2000/37**

(73) Proprietor: **ABB AB**
**721 83 Västeras (SE)**

(72) Inventors:
• **GERTMAR, Lars**
**S-722 26 Västeras (SE)**
• **LEIJON, Mats**
**S-723 35 Västeras (SE)**

(74) Representative: **Newby, Martin John**
**JY & GW Johnson,**
**Kingsbourne House,**
**229-231 High Holborn**
**London WC1V 7DP (GB)**

(56) References cited:
**EP-A- 0 749 190        US-A- 4 517 471**
**US-A- 5 036 165        US-A- 5 343 139**

• **BIAN J, RAMEY D G, NELSON R J: "A Study of Equipment Sizes and Contraints for a Unified Power Flow Controller" PROCEEDINGS OF THE 1996 IEEE POWER ENGINEERING SOCIETY TRANSMISSION AND DISTRIBUTION CONFERENCE, 15 - 20 May 1996, pages 332-338, XP002101519 Los Angeles, CA, USA cited in the application**

**EP 1 034 593 B1**

**Description**

<u>Technical Field</u>

This invention relates to a power transmission and/or distribution system including at least one power line connecting two parts of the system and at least one rotating power converter means connected in the system for controlling power flow in the system. The invention also relates to a power flow controller including at least one high-voltage rotating power converter and to a method of controlling power flow between two power systems, and in particular to controlling power flow in high-voltage power a.c. transmission and/or distribution systems using at least one high-voltage rotating power converter. By way of example, the rotating power converters may have power ratings of from a few MVA to more than 1000 MVA and rated voltages (e.m.f.s) from a few kV up to hundreds of kV insulated for operation at distribution (from 6 - 70 kV) and transmission (70 kV to from 400 - 800 kV, or even higher) voltages. Thus the invention finds application from medium voltage power systems, e.g. for industry, up to series compensation and/or voltage stabilisation of power transmission and distribution lines.

<u>Background of the Invention</u>

Heavy long-term investment in hardware, right-of-ways and overall planning is required in the creation of electric power transmission and distribution systems. Any new systems require much planning for future needs and requirements. Factors to be taken into consideration are the sales and pricing of electric power, environmental issues and restrictions, and obtaining rights of way through both densely populated and rural areas. Presently used SF6 insulating medium may not be acceptable in the future. Likewise, large quantities of oil used to insulate transformers and other equipment, e.g. capacitors, may be environmentally unacceptable. Accordingly the flexibility and handling of electric power in the future has to be improved over the levels existing today.

Present day transmission and distribution networks are operated in a free flow power mode. The fixed network impedances, together with the momentary generation and absorption of power, determine the power flow pattern in a power system. Thus the overload limit on a minor local line may limit the total bulk flow of power, even if several parallel lines at the same time are only lightly loaded. The quality of power is merely held within certain limits and is not used for differential pricing or other commercially reasons.

Several methods are employed today to control power transmission and distribution systems. Tap changers on transformers are used to change or vary the voltage. However tap changers are not regarded as qualified control elements.

Elements reducing the line reactance on certain lines can increase any corridor transmission capacity considerably. This is done by inserting fixed or step-wise varied capacitors in series with the lines. In some radial distribution lines, the compensation is over 100%, which means that some of the source impedance and resistive line voltage drop are also compensated for. However actively using the system impedances and controlled electromotive forces (e.m.f.s) for quality power flow control in a meshed network has only been the subject of testing and has not been used in practice.

Qualified impedance control has so far mainly only been used for voltage control by compensating shunt impedances for system stability reasons.

Impedance control between the phases can be used to control the voltage angles between different parts of the network resulting in very efficient power flow control. The theory for this type of control is old and is put into practice with so-called phase shifting transformers. Such transformers normally have fixed phase shifting but can be provided with variable phase shifting by using tap changers for switching the local impedance configuration. However, presently used phase shifting transformers are not regarded as qualified control elements.

Impedance control can be performed in different ways. The straight forward method is to insert controlled and fully rated capacitive or inductive elements. However in the future, various new control schemes based on modern power semiconductors or on electromagnetic devices or on both will be used. Control circuits can be designed to give virtual impedances with less than rated classical impedances. Such schemes can for example enable high compensation of line impedances without risk of network resonances.

By combinations of series-control, shunt-control and inter phase impedance control it is possible to connect power blocks without increase of short circuit currents and with full control over the flow of power between the blocks. Voltage disturbances can be prevented from being transferred from one side of the connecting line to the other.

Very qualified power flow control by means of HVDC inter-ties is of course already well-known.

Another aspect of network flexibility is to make equipment relocatable and easy to move from one location to another. In an open market the conditions for power transmission and distribution may change quickly. It is therefore also important to design equipment in a general way with as few restrictions as possible in the hardware and in the interaction with the network.

An example is that the need for reactive power may from time to time - during the specific lifetime of the equipment - change from one location to another. It is consequently a part of network flexibility that the equipment is compact and has as few fixed installations as possible, such as ground based water-cooling, separate communication, power supply, protection, etc. It should also be designed to avoid circuits which cause resonances or transients which could be affected or amplified by different or changing networks.

When maximum transmission capacity is required it may be of interest to stay as close as possible to minimum allowed safety margins to overload or instability. Under other circumstances it can be of interest to minimise the total system losses. With present computer capacity it is within reach to run a complete system simulation each time the power consumption changes by a given value or when a configuration change has taken place in the network.

By impedance control and/or controlled electro-motive force(s), e.m.f.(s), the transmission system can be managed in such a way that it is optimised at any time for specific strategies. This management can be local or global transmission capacity, losses, reactive power balance, access for maintenance, etc..

On-line simulations combined with information about actual network configuration, ambient temperatures, temperatures on critical equipment, etc., will together with impedance management open new possibilities to avoid disturbances. This will in turn lead to a better voltage quality and a better supervision of the quality of the power in general.

On-line simulations can be used to predict upcoming thermal overload or any type of instability. A strategy can be introduced, in which a large number of control means can direct the network impedances to re-establish a certain margin of safety. New network configurations may increase the total network losses or increase the costs for buying wheeling capacity. However the network may be able to maintain the important contractual need for bulk flow of power.

The controls may not need to be very fast and can consequently be designed for less continuous losses and for minimum maintenance requirement.

It is not only the main circuit equipment that need to be flexible. Also relaying protection and communications systems need to be improved for better optimising of the total network. This type of equipment based on modern micro-processors will have very few limitations and a built in flexibility in the software.

The impedance control can cope with situations - commercial or otherwise - where extra high power transfer need to be considered as short term alternative to the quality of the power or the cost of a network breakdown. Such a system requires protection and relaying controlled from a remote centre. The benefit of such a system will be a cost effective peak performance improvement for both the transfer and the quality of the power.

Power flow between interconnected AC power systems often deals with two or several parallel lines and the intention is to maintain the power transfer level after fault conditions on as many as possible of the interconnecting lines that exist between the usually meshed AC power systems.

Power flow on a transmission line is given by a well-known equation:

$$P = \frac{E_1 \cdot E_2}{X} \cdot \sin \delta$$

Thus the power flow depends on the voltage magnitudes $E_1$ and $E_2$, the line reactance X, and the power angle $\delta$ between two ends of the line. For two (more or less parallel) transmission lines, we get similar expressions. The simplest change in the expression is obtained for two equal, completely parallel lines connected to the same busbars. Loss of one of the transmission lines after a fault means that the reactance is then exactly doubled and substituted into the denominator of the equation above - with changes in the other parameters as a consequence. It is more complicated but still manageable to deal with two or several unequal transmission lines connected to different busbars in the two interconnected systems. Each system has a Thevenin equivalent and the interconnecting lines can be transformed into a series impedance between the two interconnected systems. This procedure is nowadays quickly carried out by power system simulations programs. By these simulations, the possibilities for keeping the interconnections and power transfer levels after those fault conditions which can be imagined by the utilities concerned are evaluated. Losses in the operating system far away from the economically optimal levels are acceptable temporarily in order to keep the system in operation and to deliver the electrical power, even if this will eventually reduce the lifetime of apparatus and machinery in some power system lines.

Reactive power compensators, earlier mainly synchronous machines, are essential as actuators for a stable operation of the power systems. More recently, compensation is often provided by thyristor-controlled capacitors. SVC is an acronym for Static Var Compensators used during approximately 20 years in the transmission area. Another device is the Advanced Static Var Compensator, earlier often shortened as AdvSVC, but also called STATCON, and more recently standardised by CIGRÉ/IEEE to STATCOM an acronym for Static (Synchronous) Compensator. Other known power flow controllers are UPFC (Unified Power Flow Controller) described in US-A-5343139 and MPTC (Multi-level Power Transfer Controller). These and other power flow controllers are discussed in an overview of power controllers published by Ned Mohan: "MPTC: An economical alternative to universal power flow controllers", EPE'97 Trondheim, p. 3.1027-3.1032.

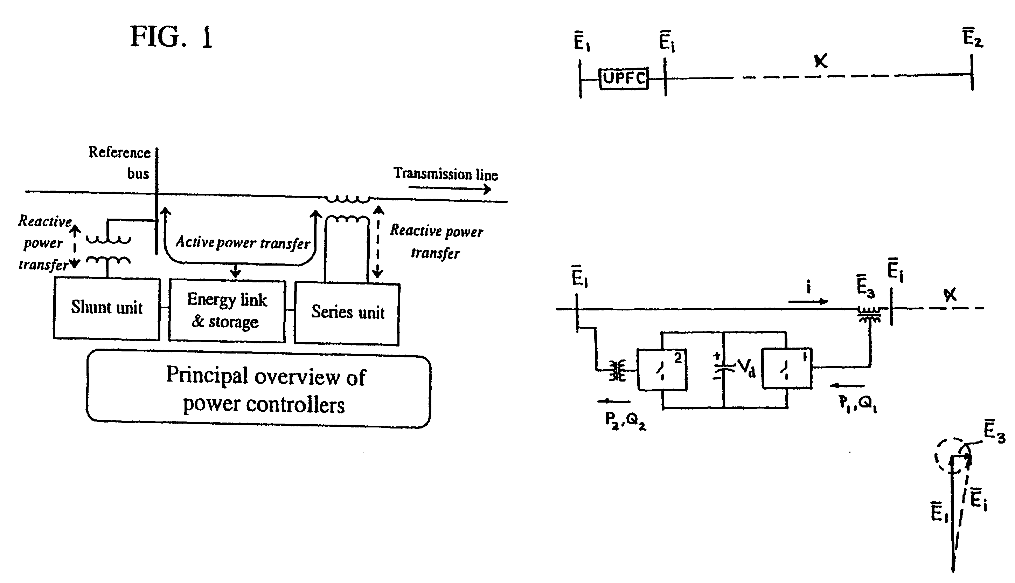

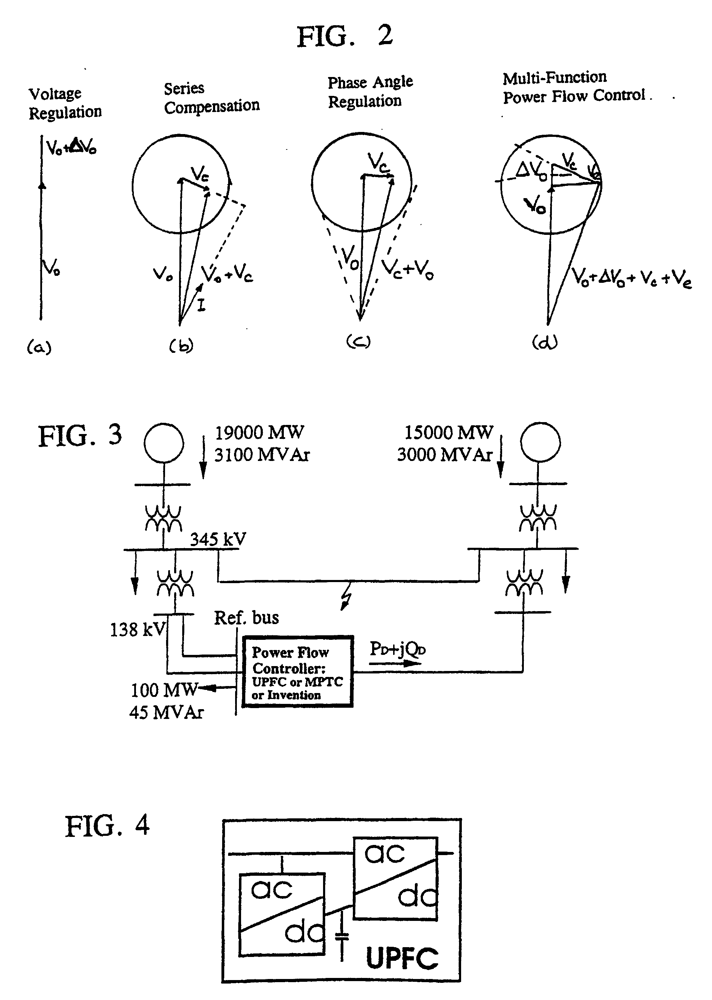

The Unified Power Flow Controller, UPFC, consists in principle of a Static Synchronous Compensator, STATCOM, as the shunt element combined with a Static Synchronous Series Compensator, SSSC. The principle of power system stabilisation and an overview of the UPFC concept are shown in Figure 1. Voltage amplitude regulation, series compensation, phase angle regulation, and multi-function power flow control are demonstrated as voltage phasors in Figure 2.

Figure 3 is reproduced from a paper by Bian, J., Ramey, D.G., Nelson R.J., and Edris, A. entitled "A Study of Equipment Sizes and Constraints for a Unified Power Flow Controller", IEEE/PES Transmission and Distribution Conference and Exposition, Los Angeles, Sept. 1996. Figure 3 shows a principal layout with two interconnected power systems showing a basic problem which the invention is meant to solve in a competitive way:

Two large power systems are connected via two ac links, at 345 kV and 138 kV. After a fault midway on the 345 kV line, one wants to continue the transmission on the 138 kV line only for a short period, thereby using its transient thermal capability. With a properly designed UPFC, it is possible to allow the total transmitted power to be increased from 175 MW to 450 MW and keep the power going for some minutes, in the weak line only, while the fault is cleared or other transmission ways become engaged by operators and/or computers. Before the fault appears, there is very little load on the 138 kV line.

FACTS is an acronym for Flexible AC Transmission Systems and is a family name for several thyristor-based means to control power flow in modern power engineering. Other FACTS devices, like UPFC and MPTC, based on rapidly controlling, directly or indirectly, one or more of the quantities in the equation above have been applied or considered in recent years for future applications. Most of these other devices are located in the interconnection line (s) or close to the busbars feeding the line(s).

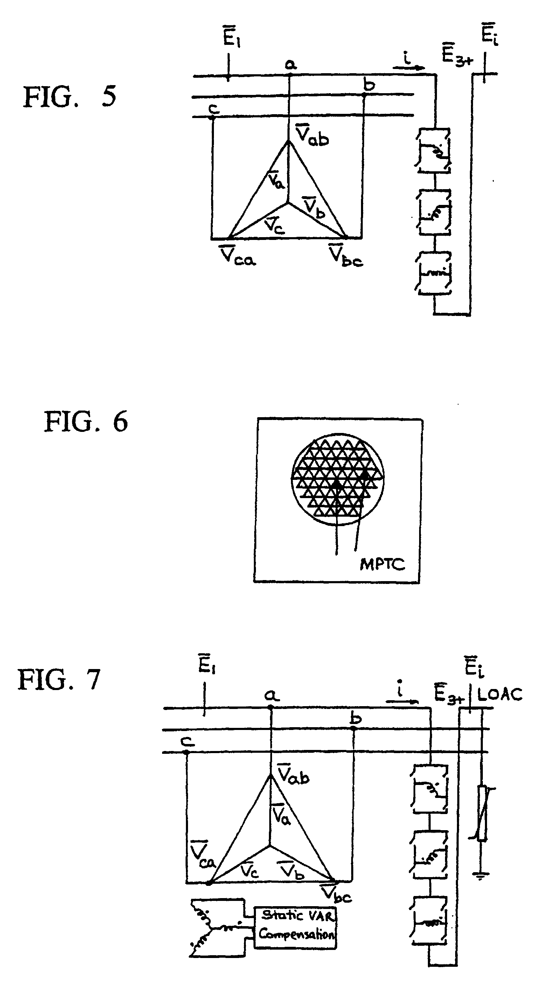

The present invention is intended to be an alternative to the UPFC (Figure 4) and the MPTC (Figures 5, 6 and 7). The UPFC holds a series-inverter connected in the transmission line via a power transformer. It also holds a shunt-inverter connected to the busbar at the line end via a power transformer. The MPTC holds a power transformer with is primary connected to the line as a Δ- or Y-connected element and several secondary windings connectable as series element in series with the line. The makeup of the series-injected voltage is controlled by the thyristor bridges shown in Figure 5 where each switch consists of two back-to-back connected thyristors. The voltage within the bridge is bypassed or added with either polarity to make up the series-injected voltage. The main advantage with the MPTC is that it works with normal SCRs and no GTOs. A main disadvantage is that it has no energy stored in a capacitor or in a rotating device. Another disadvantage is that the SCRs are operating on high potential relative to ground like in HVDC transmission links. Both the UPFC and the MPTC need power transformer(s), insulated for full voltage to ground, operating with their secondaries on the power transmission voltage level, and are facing transient voltages stressing the insulation systems and power semiconductors as well as high fault currents compared to the nominal currents.

It is generally known that the connection of a synchronous machine, normally a generator, to a power network must be made via a Δ/Y-connected so-called step-up power transformer, since the voltage of the power network normally lies at a higher level than the voltage of the rotating electric machine. Together with the synchronous machine, this power transformer thus constitutes integrated parts of a plant. The power transformer constitutes an extra cost and also entails the advantage that the total efficiency of the system is lowered. The power transformer transfers the high-frequency voltage transients capacitively and exaggerated compared with the inductively transferred fundamental-frequency components. If it were possible to manufacture rotating machines for considerably higher insulation voltages, the step-up transformer could thus be omitted in several plants. The magnetic circuit of a rotating electric machine is, in most cases, disposed in the stator. Thus in the description below, the magnetic circuit will normally be described as a stator with a laminated core, the winding of which will be referred to as a stator winding, and the slots in the laminated core for the winding will be referred to as stator slots or simply slots.

The stator winding is disposed in slots in the laminated iron core, the slots normally having a cross section as that of a rectangle or a trapezoid. Each winding phase comprises a number of series- or shunt-connected coil groups and each coil group comprises a number of series- or shunt-connected coils. The different parts of the coil are designated coil side for that part which is placed in the stator and coil end for that part which is disposed outside the stator. A coil comprises one or more conductors brought together in height and/or width.

The stator body for large synchronous machines is often made of sheet steel with a welded construction. The laminated core is normally made from varnished 0.35 or 0.5 mm electric sheet. For larger machines, the sheet is punched into segments which are attached to the stator body by means of wedges/dovetails. The laminated core is retained by pressure fingers and pressure plates.

Between each conductor there is a thin insulation, for example epoxy/glass fibre. Such a thin insulation means a considerable capacitive coupling between adjacent conductors in the armature winding and from the winding to ground. A considerable difference between low-frequency, LF, insulation stress is thus caused by the electro-motive force, e.m.f., and high-frequency, HF, insulation stress caused by external transients from the external power lines.

The coil is insulated against the slot with coil insulation, that is, an insulation intended to withstand the rated voltage of the machine to earth or ground. As insulating material, various plastics, varnish and glass fibre materials may be used. Usually, so-called mica tape is used, which is a mixture of mica and hard plastics, especially produced to provide resistance to partial discharges, which can rapidly break down the insulation. The insulation is applied to the coil by winding the mica tape around the coil in several layers. The insulation is impregnated, and then the coil side is provided with a semiconducting ground-potential layer by being painted with a coal-based paint to improve the contact with the surrounding stator which is connected to ground potential.

Multi-phase AC windings are designed either as single-layer or two-layer windings. In the case of single-layer windings, there is only one coil side per slot, and in the case of two-layer windings there are two coil sides per slot. Two-layer windings are usually designed as diamond windings, whereas the single-layer windings which are relevant in this connection may be designed as a diamond winding or as a concentric winding. In the case of a diamond winding, only one coil span (or possibly two coil spans) occurs, whereas flat windings are designed as concentric windings, that is, with a greatly varying coil width. By "coil width" is meant the distance in circular measure between two coil sides belonging to the same coil, either in relation to the relevant pole pitch or in the number of intermediate slot pitches. Usually, different variants of chording are used, for example fractional pitch, to give the winding the desired properties.

The type of winding substantially describes how the coils in the slots, that is, the coil sides, are connected together outside the stator, that is, at the coil ends.

Outside the laminated sheets of the stator, the coil is not provided with a painted semiconducting ground-potential layer. The coil end is normally provided with an E-field control in the form of so-called corona protection varnish intended to convert a radial field into an axial field, which means that the insulation on the coil ends occurs at a high potential relative to ground. This sometimes gives rise to corona in the coil-end region, which may be destructive. The so-called field-controlling points at the coil ends are a problem for a rotating electric machine.

The conductor area of the windings is determined by the current intensity in question and by the cooling method used. The conductor and the coil usually have a rectangular shape to maximise the amount of conductor material in the slot. A typical coil is formed of so-called Roebel bars, in which certain of the bars are hollow for the passage of a coolant, because the major part of the losses are created in the conductors - at high voltage potential to ground. A Roebel bar comprises a plurality of rectangular, parallel-connected copper conductors, which are transposed 360 degrees along the slot. Ringland bars with transpositions of 540 degrees and other transpositions also occur. The transposition is made to avoid the occurrence of circulating currents which are generated in a cross section of the conductor material, as viewed from the magnetic field.

Most synchronous machines have a field winding in the rotor, where the main flux is generated by direct current, and an AC winding in the stator. The synchronous machines are normally of three-phase design. Sometimes, the synchronous machines are designed with salient poles. The latter must have a DC winding in the rotor for its excitation while those machines which do not have salient poles might be equipped with a multi-phase excitation winding for utilisation in so-called converter cascades, in windmills, etc..

During the last few decades, there have been increasing requirements for rotating electric machines for higher voltages than it has previously been possible to design. The maximum voltage level which, according to the state of the art, has been possible to achieve for synchronous machines with a good yield in the coil production is around 25-30 kV.

Certain attempts to a new approach as regards the design of synchronous machines are described, inter alia, in an article entitled "Water-and-oil-cooled Turbogenerator TVM-300" in J. Elektrotechnika, No. 1, 1970, pp. 6-8, in US-A-4,429,244 and in the Russian patent document CCCP Patent 955369. All these attempts aim at substantially increased voltage ratings.

A report from Electric Power Research Institute, EPRI, EL-3391, from 1984 describes a review of machine concepts for achieving a higher rated voltage of a rotating electric machine for the purpose of being able to connect a machine to a power network without an intermediate transformer. Such a solution is judged by the investigation to provide good efficiency gains and great economic advantages. The main reason that it was considered possible in 1984 to start developing generators for direct connection to power networks was that, at that time, a superconducting rotor had been produced.

All these references deal with machines whose neutral points are normally operated close to ground potential. To connect a rotating AC machine as a series element, i.e., with a disassociated neutral point, in a power line with a much higher nominal voltage than the rated voltage of the machine is very difficult as today's insulation systems are in no way coordinated to withstand those transient voltages towards ground which exist on the power transmission levels.

To increase the power of a rotating electric machine, as today's standard designs, it is known to attempt to increase the current in the AC coils. This has been achieved by optimising the quantity of conducting material, that is, by close-packing of rectangular conductors in the rectangular rotor slots. The aim has been to handle the increase in temperature resulting from this by increasing the quantity of insulating material and using more temperature-resistant and hence more expensive insulating materials. The high temperature and field load on the insulation has also caused problems with the life of the insulation. In the relatively thick-walled insulating layers which are used for high-voltage equipment, for example impregnated layers of mica tape, partial discharges, PD, constitute a serious problem. When manufacturing these insulating layers, cavities, pores, and the like, will easily arise, in which internal corona discharges arise when the insulation is subjected to high electric field strengths. These corona discharges gradually degrade the material and may lead to electric breakdown through the insulation.

US-A-5 036 165 (ELTON RICHARD K ET AL) discloses a power conductor for high voltage electric rotating machines (column 1 lines 25 to 35). To prevent the occurrence of corona discharges, caused by the electric field generated by the conductor, the conductor is surrounded by an insulator comprising an inner semi-conductor layer 104, an intermediate insulating layer 106 and an outer semi-conductor layer 110.

US-A-4 517 471 (SACHS KLAUS) discloses a power distribution system with at least one power line (R, S, T; $U_s$, $V_s$, $W_s$) connecting two parts of the system and a high voltage rotating power converter 25 for controlling the power flow. The rotating power converter 25 includes conductors (primary and secondary windings) which are connected to the power lines.

### Summary of the Invention

An aim of the present invention is to enable a rotating power converter means to be inserted as a series element, i.e. with a disassociated neutral point, in a power line for controlling power flow.

Another aim of the present invention is to enable a rotating power converter means to be connected directly, by a transformerless connection, to a power line, e.g. a transmission line of a transmission system.

According to one aspect of the present invention there is provided a power transmission and/or distribution system as claimed in the ensuing claim 1.

According to second and third aspects of the present invention there is provided a power flow controller as claimed in the ensuing claim 20 and 23, respectively.

According to a fourth aspect of the present invention there is provided a method of controlling power flow between two connected power systems as claimed in the ensuing claim 26

In this specification the term "semiconducting material" means a material which has a considerably lower conductivity than an electric conductor but which does not have such a low conductivity that it is an electrical insulator. Suitably, but not exclusively, a semiconducting material should have a volume resistivity of from 1 to $10^5$ ohm·cm, preferably from 10 to 500 ohm·cm and most preferably from 10 to 100 ohm·cm, typically about 20 ohm·cm.

The electrical insulation is of unitary form with the layers either in close mechanical contact or, more preferably, joined together, e.g. bonded by extrusion. The layers are preferably formed of plastics material having resilient or elastic properties at least at ambient operating temperatures. This allows the cable forming the winding to be flexed and shaped into the desired form of the winding. By using for the layers only materials which can be manufactured with few, if any, defects having similar thermal properties, thermal and electric loads within the insulation are reduced. In particular the insulating intermediate layer and the semiconducting inner and outer layers should have at least substantially the same coefficients of thermal expansion ($\alpha$) so that defects caused by different thermal expansions when the layers are subjected to heating or cooling will not arise. Ideally the layers will be extruded together around the conducting means.

Conveniently the electrically insulating intermediate layer comprises solid thermoplastics material, such as low or high density polyethylene (LDPE or HDPE), polypropylene (PP), polybutylene (PB), polymethylpentene (PMP), ethylene (ethyl) acrylate copolymer, cross-linked materials, such as cross-linked polyethylene (XLPE), or rubber insulation, such as ethylene propylene rubber (EPR) or silicone rubber. The semiconducting inner and outer layers may comprise similar material to the intermediate layer but with conducting particles, such as particles of carbon black or metal, embedded therein. Generally it has been found that a particular insulating material, such as EPR, has similar mechanical properties when containing no, or some, carbon particles. The intermediate layer may be divided into two or more sub-layers by one or more additional intermediate layers of semiconducting material.

The screens of semiconducting inner and outer layers form substantially equipotential surfaces on the inside and outside of the insulating intermediate layer so that the electric field is confined between the inner and outer layers in the intermediate layer. In the case of concentric semiconducting and insulating layers, the electric field is substantially radial and is distributed relatively evenly within the intermediate layer between the inner and outer layers. In particular, the semiconducting inner layer is arranged to be in electrical contact with, and to be at the same potential as, the conducting means which it surrounds. The semiconducting outer layer is designed to act as a screen to prevent losses caused by induced voltages. Induced voltages in the outer layer could be reduced by increasing the resistance of the outer layer. The resistance can be increased by reducing the thickness of the outer layer but the thickness cannot be reduced below a certain minimum thickness. The resistance can also be increased by selecting a material for the layer having a higher resistivity. On the other hand, if the resistivity of the semiconducting outer layer is too great, the voltage potential midway between adjacent spaced apart points at a controlled, e.g. earth, potential will become sufficiently high as to risk the occurrence of corona discharge in the insulation with consequent erosion of the insulating and semiconducting layers. The semiconducting outer layer is therefore a compromise between a conductor having low resistance and high induced voltage losses but which is easily connected to a controlled potential, typically earth or ground potential, and an insulator which has high resistance with low induced voltage losses but which needs to be connected to the controlled potential along its length. Thus the resistivity $\rho_s$ of the semiconducting outer layer should be within the range $\rho_{min} < \rho_s < \rho_{max}$, where $\rho_{min}$ is determined by permissible power loss caused by eddy current losses and resistive losses caused by voltages induced by magnetic flux and $\rho_{max}$ is determined by the requirement for no corona or glow discharge.

If the semiconducting outer layer is earthed, or connected to some other controlled potential, at spaced apart intervals along its length, there is no need for an outer metal shield and protective sheath to surround the semiconducting outer layer. The diameter of the cable is thus reduced allowing more turns to be provided for a given size of core winding.

Increased current load leads to problems with voltage (E) field concentrations at the corners at a cross section of a coil causing large local loads on the insulation. Likewise, the magnetic (B) field in the teeth of the stator will be concentrated at the sharp corners. This means that magnetic saturation occurs locally and that the magnetic core is not utilised in full and that the waveform of the generated voltage/current will be distorted. In addition, eddy losses caused by induced eddy currents in the conductors, which arise because of the geometry of the conductors in relation to the B field, causes additional disadvantages at increasing current densities. A further improvement of the invention is achieved by making the coils and the slots in which the coils are placed essentially circular instead of rectangular. By making the cross section of the coils circular, these will be surrounded by a constant B field without concentrations where magnetic saturation may arise. Also the E field in the coil will be distributed evenly over the cross section and local loads on the insulation are considerably reduced. In addition, it is easier to place circular coils in slots in such a way that the number of coil sides per coil group may increase and an increase of the voltage may take place without the current in the conductors having to be increased. The reason is that the cooling of the conductors is facilitated by, on the one hand, a lower current density and hence lower temperature gradients across the insulation and, on the other hand, by the circular shape of the slots which entails a more uniform temperature distribution over a cross section. Additional improvements may also be achieved by composing the conductor from smaller parts, so-called strands. The strands may be insulated from each other and only a small number of strands may be left uninsulated and in contact with the inner semiconducting layer, to ensure that this is at the same potential as the conductor.

The advantages of using a rotating electric machine according to the present invention are that the machine can be operated at overload current levels for a considerably longer period of time than what is usual for such machines without being damaged. This is a consequence of the composition of the machine and the limited thermal load of the insulation. It is, for example, possible to load the machine with up to 100 % overload for a period exceeding 15 minutes and up to two hours.

As synchronous condensers it is known to use, inter alia, synchronous motors without a connected mechanical load. By adapting the magnetisation, the synchronous condenser may give either inductive or capacitive kVAr. When the compensator is connected to a power network, it may compensate for inductive or capacitive load on the network within an interval. Since the synchronous condenser must be connected to certain power networks with voltages exceeding about 20 kV via a transformer, the range of the synchronous condenser within which it may provide the network with reactive power is influenced by the fact that the reactance of the transformer limits the angle of lag between current and voltage. With a rotating electric machine according to the present invention, it is possible to design a synchronous condenser which may be connected to a power network without an intermediate transformer and which may be operated with a chosen under- or over-excitation to compensate for inductive or capacitive loads on the network.

The use of winding cables having a circular cross section is preferred although cables with a different cross section may be used to provide a better packing density. To build up a voltage in the rotating electric machine, the cable is disposed in several consecutive turns in slots in the magnetic core. The winding can be designed as a multi-layer concentric cable winding to reduce the number of coil-end crossings. The cable-winding may be made with tapered or stepped insulation to utilise the magnetic core in a better way, in which case the shape of the slots may be adapted to the tapered or stepped insulation of the winding.

A significant advantage with a rotating electric machine according to the referenced invention is that the electric E field is near zero in the coil-end region outside the outer layer of semiconducting material and that with the outer layer at a controlled, e.g. ground, potential, the electric field need not be controlled. This means that field concentrations are not obtained, either within sheets, in coil-end regions or in the transition therebetween.

To sum up, thus, a rotating power converter means according to the present invention has a considerable number of important advantages over corresponding prior art machines. First of all, it can be connected directly as a shunt device to a power network or as a series device in a power line at all types of high insulation voltage. By high voltage are meant here insulation voltages exceeding 30 kV and up to the voltage levels which occur for power transmission networks, e.g from 400 - 800 kV and even higher, while the electro-motive force, e.m.f., might be as low as a few percent of the line voltage, i.e., 1-3 or 10-30 kV. Another important advantage is that a chosen potential, for example ground potential, has been consistently conducted along the whole winding, which means that the coil-end region can be made compact and that bracing means at the coil-end region can be applied at practically ground potential or any other chosen potential. Still another important advantage is that oilbased insulation and cooling systems disappear. This means that no sealing problems arise. Furthermore, it is possible to make a high-voltage machine for transformerless connection to or in power transmission lines without a superconducting rotor which was the basic reason for the EPRI work reported in EL-3391, from 1984, and referenced above. A further advantage of the present invention is that any forced cooling can be made at ground potential.

Lastly, the present invention opens up possibilities to stabilise power transmission lines as a series device in an environmentally-friendly way. The no-load/no-interaction losses are considerably lower than those associated with the UPFC and the MPTC. The rotating cable-machine has its major losses associated with the laminated stator core because its rated current-density is low. The load/interaction losses are thus associated with the actual level of interaction as a series device. With the actual armature winding concept and the air-gap between, too, there is a negligible capacitive coupling of the voltage transients from the transmission line to the rotor winding on ground potential and to its power electronic converter. A considerable space and weight saving from the installation point of view is obtained with rotating power converter means according to the invention, since a previous installation design with power electronic converters, power capacitors and power transformers is replaced. Since transformers can be avoided, the efficiency of the system is considerably increased. Regarding the environment, neither $SF_6$ nor transformer oil is needed for insulation.

Brief Description of the Drawings

Embodiments of the invention will now be described, by way of example only, with particular reference to the accompanying drawings, in which:

Figure 1 shows the principle of power system stabilisation and an overview of the UPFC concept;

Figure 2 shows voltage phasors for various voltage regulation technologies;

Figure 3 shows two interconnected power systems;

Figure 4 shows a block diagram of a UPFC of the type described in US-A-5343139;

Figure 5 shows a principal circuit diagram on an MPTC with a Δ-connected power transformer primary and three secondary windings connectable via power semiconductor switches in series with on phase;

Figure 6 shows the possible voltage phasor positions for an MPTC;

Figure 7 shows the principal circuit diagram of the MPTC shown in Figure 5 but now expanded with an SVC, and protected against over-voltages on the line side, and used as a power conditioner, e.g. for industrial loads;

Figure 8 shows the main circuit diagram of one embodiment of a power flow controller according to the invention comprising two high-voltage rotating machines;

Figure 9 shows the main circuit diagram of another embodiment of a power flow controller according to the invention comprising three high-voltage rotating machines; and

Figure 10 is a schematic sectional view on an enlarged scale through a HV insulated conductor turn for a stator and/or rotor of a high-voltage rotating electric machine.

Description of Preferred Embodiments

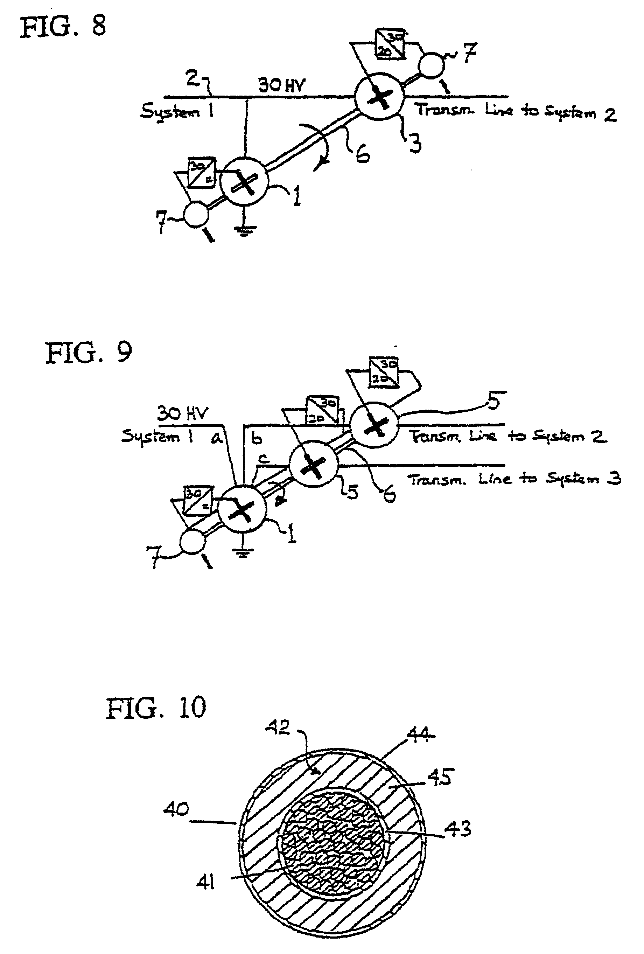

Figure 8 shows a basic system of the present invention. In the following part of the description, to simplify understanding, high-voltage rotating "power converter means" will be referred to as high-voltage rotating "synchronous" machines although the rotating shafts of such machines do not need to rotate synchronously with the rotating stator field which is energised from the power transmission line.

Figure 10 shows a cable for a core winding for use in a core (stator or rotor) of a "synchronous" machine. The cable has inner conductor means 41 surrounded by electrical insulation 42. The electrical insulation 42 is of unified form and comprises an inner semiconducting layer 43, an outer semiconducting layer 44 and, sandwiched between these semiconducting layers, an insulating layer 45. At least one of the conductors of the conductor means 41 has its insulation, e.g. varnish insulation, removed therefrom so that the inner semiconducting layer is in electrical contact with the conductor means 41. The layers 43 - 45 preferably comprise thermoplastics materials in close mechanical contact or preferably solidly connected to each other at their interfaces. Conveniently these thermoplastics materials have similar coefficients of thermal expansion and are resilient or elastic at least at room temperature. Preferably the layers 43 - 45 are extruded together around the inner conducting means to provide a monolithic structure so as to minimise the risk of cavities and pores within the electrical insulation. The presence of such pores and cavities in the insulation is undesirable since it gives rise to corona discharge in the electrical insulation at high electric field strengths.

By way of example only, the solid insulating layer 45 may comprise cross-linked polyethylene (XLPE). The inner and outer semiconducting layers may comprise, for example, a base polymer, such as ethylene-propylene copolymer rubber (EPR) or ethylene-propylene-diene monomer rubber (EPDM), and highly electrically conductive particles, e.g. particles of carbon black embedded in the base polymer. The volume resistivity, e.g. about 20 ohm·cm, of these semiconductive layers may be adjusted as required by varying the type and proportion of carbon black added to the base polymer. The following gives an example of the way in which resistivity can be varied using different types and quantities of carbon black.

| Base Polymer | Carbon Black Type | Carbon Black Quantity (%) | Volume Resistivity $\Omega \cdot$ cm |
|---|---|---|---|
| Ethylene vinyl acetate copolymer/ nitrite rubber | EC carbon black | ~15 | 350-400 |
| -"- | P-carbon black | ~37 | 70-10 |
| -"- | Extra conducting carbon black, type I | ~35 | 40-50 |
| -"- | Extra conducting black, type II | ~33 | 30-60 |
| Butyl grafted polyethylene | -"- | ~25 | 7-10 |
| Ethylene butyl acrylate copolymer | Acetylene carbon black | ~35 | 40-50 |
| -"- | P carbon black | ~38 | 5-10 |
| Ethylene propene rubber | Extra conducting carbon black | ~35 | 200-400 |

The outer semiconductive layer 44 is connected at spaced apart regions along its length to a controlled potential. In most practical applications this controlled potential will be earth or ground potential, the specific spacing apart of adjacent earthing points being dependent on the resistivity of the layer 44.

The semiconducting layer 44 acts as a static shield and as an earthed outer layer which ensures that the electric field of the winding cable is retained within the solid insulation between the semiconducting layers 43 and 44. Losses caused by induced voltages in the layer 44 are reduced by increasing the resistance of the layer 44. However, since the layer 44 must be at least of a certain minimum thickness, e.g. no less than 0.8 mm, the resistance can only be increased by selecting the material of the layer to have a relatively high resistivity. The resistivity cannot be increased too much, however, else the voltage of the layer 44 mid-way between two adjacent earthing points will be too high with the associated risk of corona discharges occurring.

To optimise a rotating electric machine, the design of the magnetic circuit as regards the slots and the teeth, respectively, are of decisive importance. The slots should connect as closely as possible to the casing of the coil sides. It is also desirable that the teeth at each radial level are as wide as possible. This is important to minimise the losses, the magnetisation requirement, etc., of the machine.

With access to a conductor and, for example, the cable described above, there are great possibilities of being able to optimise the magnetic core from several points of view. In the following, a magnetic circuit in the stator of the rotating electric machine is referred to. In conventional manner, the stator is composed of a laminated core of electric sheets successively composed of sector-shaped sheets. From a back portion of the core, located at the radially outermost end, a number of teeth extend radially inwards towards the rotor. Between the teeth there are a corresponding number of slots. The use of cables according to the above among other things permits the depth of the slots for high-voltage machines to be made larger than has previously been possible.

The slots may have a cross section tapering towards the rotor since the size of cable insulation becomes lower for each winding layer towards the air gap. A preferred embodiment is that the slot substantially consists of a circular cross section around each layer of the winding with narrower waist portions between the layers. With some justification, such a slot cross section may be referred to as a "cycle chain slot". In an embodiment, cables with three different dimensions of the cable insulation are used, arranged in three correspondingly dimensioned sections, that is, in practice, a modified cycle chain slot will be obtained. The stator tooth can be shaped with a practically constant radial width along the depth of the whole slot. This can be used to taper, step or grade the insulation level in the shunt-machine.

A core winding suitably comprises a multi-layer, concentric cable winding. Such a winding means that the number of crossings at the coil ends is minimised by placing all the coils within the same group radially outside one another. This arrangement also allows a simpler method for the manufacture and the threading of the stator winding in the different slots.

The invention is generally applicable to utilise rotating power converter means (electric machines) for electro-motive forces, e.m.f.s, exceeding 3 to 4 kV and insulation levels typically above 30 kV (but including from 6 - 70 kV for distribution systems and up to 800 kV or more for transmission systems) towards ground.

In Figure 8, reference numeral 1 designates a high-voltage (HV), rotating "synchronous" machine, or shunt-machine, directly connected, i.e. without a power transformer, as a shunt device to a high-voltage power line 2. At least one other high-voltage rotating "synchronous" machine 3, or series-machine, having a disassociated neutral point, i. e. without a power transformer, is directly connected as a series device in the high-voltage power line 2.

For the stabilisation of more than one transmission line starting at the same busbar, the system shown in Figure 8 can be modified as shown in Figure 9 by the inclusion of more than one series-machines 5.

The two or more HV rotating machines (1 and 3 in Figure 8 and 1 and 5 in Figure 9) are mechanically coupled to each other so that their shafts (connected to or forming part of the rotors of the rotating machines) form a common shaft string 6 with the same rotational speed. The rotor windings are energised via converters from a small (low voltage) auxiliary-power generator 7 attached to the shaft string 6.

All but one of the two, or more, rotating machines should have a non-salient-pole rotor, i.e. a constant air-gap length (neglecting the variation due to the slots) and a multi-phase, e.g. 3-phase or 2-phase, winding while the remaining machine might have a salient-pole rotor and a DC-field winding. The multi-phase winding arrangement allows the rotating machine to generate an electro-motive force, e.m.f., that might have varying size and arbitrary phase angle compared to the phase angle of the other machines. The output voltage from the series-machine(s) is controlled to fall inside a circle like the circle in Figure 2(b). The output voltage(s) is/are added to the busbar voltage from the shunt-machine.

The shunt-machine 1 is more or less a shunt compensator, normally running as a motor lightly loaded by the series-machine(s) 3 or 5 and the auxiliary-power generator 7. The shunt-machine 1 can produce or consume reactive power. It can be connected in parallel to other reactive elements, like fixed capacitor banks or reactors, thyristor controlled shunt capacitors or reactors, etc.. The shunt-machine can also act as a power transformer feeding another (transmission or distribution) network, ("System 3 in Figure 9) where attention is now paid to the fact that "a", "b" and "c" terminals need not be connected to the same winding terminals in the shunt-machine 1. The shunt-machine can thus also act as a step-down or step-up auto-transformer. Its armature winding can be equipped with tapered insulation levels. In Figures 8 and 9, the machine 1 is shown as having a DC-output converter, a salient-pole rotor and a DC-field winding but it could also have rotor arrangements like the series-machine(s).

The series-machine 3 or 5 is more or less a series compensator, normally running as a generator fed by the shunt-machine 1 and its rotor winding is energised by the auxiliary-power generator 7. The series-machine 1 can produce or consume both active and reactive power. It can compensate the active and reactive voltage drops in the transmission line. Its electro-motive force, e.m.f., has a size and phase angle determined by the power electronics converter feeding the rotor winding. It is feasible from the new insulation system for the windings. The great effect of inductive coupling - but negligible capacitive coupling - between the transmission voltage level and the rotor is essential to give apparent reality to the invented concept. The armature winding in the series-machine cannot be equipped with tapered insulation levels because the armature winding produces an electro-motive force, e.m.f., which is small compared to its insulation level to ground.

When the series-machine is idling, the laminated core losses are low. The shunt-machine as well as the series-machine have - from adiabatic models - a long-time overload and overvoltage capability.

The number of series-machines and power electronic converters can be increased furthermore as can be realised by the man skilled in the art of power electronics.

The auxiliary-power generator can be any of wound-field or permanent-magnet generators known to the man skilled in the art of rotating electrical machines. For rapid reduction of the magnetic energy which is associated with the wound-field systems in the shunt- and series-machines, it could be beneficial to utilise power electronic converters as converters that are capable of bi-directional power conversion as such is well known to the man skilled in the art of power electronics. The auxiliary-power link can be either AC or DC.

All power lines and machines are visualised as three-phase machines but any phase number associated with rotating fields could be chosen as it is well known to the man skilled in the art of power engineering.

The description of the invention has dealt with the electromagnetic devices for obtaining power flow control between two power systems connected by at least one power line and does not deal in great detail with the microprocessor-based automatic control and protection means and models that are needed to calculate the control signals that are sent to the rotating electric machines. In particular the described embodiments relate to high voltage power a.c. transmission systems carrying alternating current(s) at selected line voltage(s) and fundamental frequency. By using one or more rotating power converter means connected directly, i.e. by transformerless connection, to the transmission line at least one alternating voltage is generated at the fundamental frequency of the alternating current(s) with controllable magnitude and phase angle relative to the transmission line voltage(s).

The advantages with the invention, in comparison with its main competitors, UPFC and MPTC, are:

- Interconnected power transmission systems with improved power flow control
- Capability to temporarily overload transmission lines after cleared faults
- Improved voltage quality
- Less losses
- Less risk for resonances
- More energy stored in the system via the moment of inertia
- Less occupation of areas
- Little impact on the environment
- The electric fields are kept inside the solid insulation structures
- No $SF_6$ and no transformer oils as insulation media
- Negligible harmonics
- Relocatable, simple cooling as well as few power apparatuses

Although it is preferred that the electrical winding insulation should be extruded in position, it is possible to build up an electrical insulation system from tightly wound, overlapping layers of film or sheet-like material. Both the semiconducting layers and the electrically insulating layer can be formed in this manner. An insulation system can be made of an all-synthetic film with inner and outer semiconducting layers or portions made of polymeric thin film of, for example, PP, PET, LDPE or HDPE with embedded conducting particles, such as carbon black or metallic particles and with an insulating layer or portion between the semiconducting layers or portions.

For the lapped concept a sufficiently thin film will have butt gaps smaller than the so-called Paschen minima, thus rendering liquid impregnation unnecessary. A dry, wound multilayer thin film insulation has also good thermal properties.

Another example of an electrical insulation system is similar to a conventional cellulose based cable, where a thin cellulose based or synthetic paper or non-woven material is lap wound around a conductor. In this case the semiconducting layers, on either side of an insulating layer, can be made of cellulose paper or non-woven material made from fibres of insulating material and with conducting particles embedded. The insulating layer can be made from the same base material or another material can be used.

Another example of an insulation system is obtained by combining film and fibrous insulating material, either as a laminate or as co-lapped. An example of this insulation system is the commercially available so-called paper polypropylene laminate, PPLP, but several other combinations of film and fibrous parts are possible. In these systems various impregnations such as mineral oil can be used.

## Claims

1. A power transmission and/or distribution system including at least one power line (2) connecting two parts of the system and at least one high voltage rotating power converter means (3) connected in the system for controlling power flow in the system and including at least one winding having electrically conducting means (41), **charac-**

**terised in that** said at least one rotating power converter means comprises a first rotating electric machine (3) connected in shunt with said at least one transmission line and at least one second rotating electric machine (1) connected directly, by a transformerless connection, in series with said at least one power line, and **in that** said electrically conducting means (41) has surrounding electrically insulating means (42) for confining the electric field in use of the power converter means comprising an inner layer (43) of semiconducting material in electrical contact with said electrical conducting means, an outer layer (44) of semiconducting material at a controlled electrical potential along its length and an intermediate layer (45) of electrically insulating material between the said inner and outer layers (43 and 44).

2.  A system according to claim 1, **characterised in that** reactive means are arranged in parallel with said first rotating electric machine.

3.  A system according to claim 1 or 2, **characterised in that** said first rotating electric machine comprises an auto-transformer feeding an additional power network.

4.  A system according to any one of the preceding claims, **characterised in that** the semiconducting outer layer (44) has a resistivity of from 1 to $10^5$ ohm·cm, preferably from 10 to 500 ohm·cm, and most preferably from 10 to 100 ohm·cm.

5.  A system according to any one of the preceding claims, **characterised in that** the resistance per axial unit length of the semiconducting outer layer (44) is from 5 to 50,000 ohm.m$^{-1}$.

6.  A system according to any one of the preceding claims, **characterised in that** the resistance per axial unit of length of the semiconducting outer layer (44) is from 500 to 25,000 ohm.m$^{-1}$, preferably from 2,500 to 5,000 ohm.m$^{-1}$.

7.  A system according to any one of any one of the preceding claims, **characterised in that** the semiconducting outer layer (44) is contacted by conductor means at said controlled electrical potential at spaced apart regions along its length, adjacent contact regions being sufficiently close together that the voltages of mid-points between adjacent contact regions are insufficient for corona discharges to occur within the electrically insulating means.

8.  A system according to any one of the preceding claims, **characterised in that** said controlled electrical potential is at or close to ground potential.

9.  A system according to any one of the preceding claims, **characterised in that** the said intermediate layer (45) is in close mechanical contact with each of said inner and outer layers (43 and 44).

10. A system according to any one of claims 1 to 8, **characterised in that** the said intermediate layer (45) is joined to each of said inner and outer layers (43 and 44).

11. A system according to claim 10, **characterised in that** the strength of the adhesion between the said intermediate layer (45) and the semiconducting outer layer (44) is of the same order of magnitude as the intrinsic strength of the material of the intermediate layer (45).

12. A system according to claim 10 or 11, **characterised in that** the said layers (43-45) are joined together by extrusion.

13. A system according to claim 12, **characterised in that** the inner and outer layers (43 and 44) of semiconducting material and the insulating intermediate layer (45) are applied together over the conducting means (41) through a multi layer extrusion die.

14. A system according to any one of the preceding claims, **characterised in that** said inner layer (43) comprises a first plastics material having first electrically conductive particles dispersed therein, said outer layer (44) comprises a second plastics material having second electrically conductive particles dispersed therein, and said intermediate layer (45) comprises a third plastics material.

15. A system according to claim 15, **characterised in that** each of said first, second and third plastics materials comprises an ethylene butyl acrylate copolymer rubber, an ethylene-propylene-diene monomer rubber (EPDM), an ethylene-propylene copolymer rubber (EPR), LDPE, HDPE, PP, XLPE, EPR or silicone rubber.

**16.** A system according to claim 14 or 15, **characterised in that** said first, second and third plastics materials have at least substantially the same coefficients of thermal expansion.

**17.** A system according to claim 14, 15 or 16, **characterised in that** said first, second and third plastics materials are the same material.

**18.** A system according to any one of the preceding claims, **characterised in that** the electrically insulating means (42) is designed for high voltage, suitably in excess of 10 kV, in particular in excess of 36 kV, and preferably more than 72.5 kV up to very high transmission voltages, such as 400 kV to 800 kV or higher.

**19.** A system according to any one of the preceding claims, **characterised in that** the electrically insulating means (42) is designed for a power range in excess of 0.5 MVA, preferably in excess of 30 MVA and up to 1000 MVA.

**20.** A power flow controller for controlling the flow of electric power in an alternating current transmission system including a transmission line (2) having two ends and carrying alternating current at a selected transmission line voltage and fundamental frequency between said two ends, **characterised in that** the controller comprises high voltage rotating power converter means (1) including a winding connected in shunt across conductors of said transmission line (2) for generating an alternating voltage at the said fundamental frequency with controllable magnitude and phase angle relative to said transmission line voltage, at least one further winding having electrically conducting means (41), and coupling means for coupling the at least one further winding of said rotating power converter means directly in series with the said transmission line, and electrically insulating means (42) surrounding said electrically conducting means for confining the electric field in use of the power converter means and comprising an inner layer (43) of semiconducting material in electrical contact with said electrical conducting means, an outer layer (44) of semiconducting material at a controlled electrical potential along its length and an intermediate layer (45) of electrically insulating material between the said inner and outer layers (43 and 44).

**21.** A power flow controller according to claim 20, **characterised in that** it further comprises control means for controlling the controllable magnitude and phase angle of the alternating voltage generated by said rotating power converter means at said fundamental frequency for controlling the power flow in said transmission line.

**22.** A power flow controller according to claim 21, **characterised in that** said control means controls the said alternating voltage to a magnitude and phase angle relative to the said transmission line voltage selectively to adjust, individually and in coordination, effective impedance of the transmission line, effective phase angle between voltages at said two ends of the transmission line and transmission line voltage magnitude.

**23.** A power flow controller for at least one a.c. transmission line (2), comprising first high voltage rotating power converter means (1) having a.c. terminals connected directly in shunt with said at least one transmission line (2), at least one second high voltage rotating power converter means (3) having a.c terminals connected directly in series with, so as to inject at least one alternating voltage into, said at least one transmission line, and shaft means (6) for rotatably connecting rotors of said first and second rotating power converter means, each of said rotating power converter means including at least one winding having electrically conducting means (41) and electrically insulating means (42) surrounding said electrically conducting means for confining the electric field in use of the power converter means and comprising an inner layer (43)of semiconducting material in electrical contact with said electrical conducting means, an outer layer (44) of semiconducting material at a controlled electrical potential along its length and an intermediate layer (45) of electrically insulating material between the said inner and outer layers (43 and 44).

**24.** A power flow controller according to claim 23, **characterised in that** it further comprises control means for controlling the first and second rotating power converter means for controlling power flow through the said at least one transmission line.

**25.** A power flow controller according to claim 24, **characterised in that** said control means controls active and reactive power exchange between said at least one transmission line and said first rotating power converter means to supply real power for the said at least one second rotating power converter means at at least one selected power factor, the said control means also controlling said at least one second rotating power converter means to generate said at least one alternating voltage with selected magnitude(s) and selected phase angle(s) between 0° and 360° to establish at least one transmission line voltage, at least one selected transmission angle and at least one transmission line voltage for controlling the power flow through said at least one transmission line.

26. A method of controlling power flow between two power systems connected by at least one power line (2), comprising connecting a first rotating power converter means (1) directly in shunt with said at least one power line, connecting at least one second rotating power converter means (3) directly in series with said at least one power line, and connecting the first and second rotating power converter means by means of a common shaft (6).

27. A method according to claim 26, **characterised in that** the or each of said rotating power converter means (1,3) has a stator, a rotor and at least one winding comprising electrically conducting means and surrounding electrically insulating means, and **in that** the electrically insulating means comprises solid material for confining the electric field in use of the power converter means.

**Patentansprüche**

1. Leistungsübertragungs- und/oder -verteilungssystem mit mindestens einer, zwei Teile des Systems verbindenden Stromleitung (2) und mindestens einem in das System geschalteten Hochspannungsdrehleistungskonvertermittel (3), um den Leistungsfluß im System zu steuern, und mit mindestens einer Wicklung mit einem stromleitenden Mittel (41), **dadurch gekennzeichnet, daß** das mindestens eine Drehleistungskonvertermittel eine erste sich drehende elektrische Maschine (3), die im Nebenschluß zu der mindestens einen Übertragungsleitung geschaltet ist, und mindestens eine zweite sich drehende elektrische Maschine (1), die über eine transformatorlose Verbindung direkt mit der mindestens einen Stromleitung in Reihe geschaltet ist, umfaßt, und daß das stromleitende Mittel (41) ein umgebendes stromisolierendes Mittel (42) aufweist, um das elektrische Feld bei Betrieb des Stromkonvertermittels zu begrenzen, das folgendes umfaßt: eine Innenschicht (43) aus einem halbleitenden Material in elektrischem Kontakt mit dem stromleitenden Mittel, eine Außenschicht (44) aus halbleitendem Material auf einem gesteuerten elektrischen Potential entlang seiner Länge und eine Zwischenschicht (45) aus elektrisch isolierendem Material zwischen der Innen- und der Außenschicht (43 und 44).

2. System nach Anspruch 1, **dadurch gekennzeichnet, daß** reaktive Mittel parallel zur ersten sich drehenden elektrischen Maschine angeordnet sind.

3. System nach Anspruch 1 oder 2, **dadurch gekennzeichnet, daß** die erste sich drehende Maschine einen Autotransformator umfaßt, der ein zusätzliches Leistungsnetz speist.

4. System nach einem der vorhergehenden Ansprüche, **dadurch gekennzeichnet, daß** die halbleitende Außenschicht (44) einen spezifischen elektrischen Widerstand zwischen 1 und $10^5$ Ohm·cm, bevorzugt zwischen 10 und 500 Ohm·cm und ganz besonders bevorzugt zwischen 10 und 100 Ohm·cm aufweist.

5. System nach einem der vorhergehenden Ansprüche, **dadurch gekennzeichnet, daß** der Widerstand pro axialer Längeneinheit der halbleitenden Außenschicht (44) zwischen 5 und 50.000 Ohm·m$^{-1}$ liegt.

6. System nach einem der vorhergehenden Ansprüche, **dadurch gekennzeichnet, daß** der Widerstand pro axialer Längeneinheit der halbleitenden Außenschicht (44) zwischen 500 und 25.000 Ohm·m$^{-1}$, bevorzugt zwischen 2500 und 5000 Ohm·m$^{-1}$ liegt.

7. System nach einem der vorhergehenden Ansprüche, **dadurch gekennzeichnet, daß** die halbleitende Außenschicht (44) in beabstandeten Gebieten entlang ihrer Länge durch Leitermittel auf dem gesteuerten elektrischen Potential kontaktiert wird, wobei benachbarte Kontaktgebiete ausreichend nahe beieinander liegen, daß die Spannungen von Mittelpunkten zwischen benachbarten Kontaktgebieten nicht ausreichen, daß Coronaentladungen innerhalb des elektrisch isolierenden Mittels auftreten.

8. System nach einem der vorhergehenden Ansprüche, **dadurch gekennzeichnet, daß** das gesteuerte elektrische Potential auf Massepotential oder in dessen Nähe liegt.

9. System nach einem der vorhergehenden Ansprüche, **dadurch gekennzeichnet, daß** sich die Zwischenschicht (45) in engem mechanischen Kontakt zu der Innen- und der Außenschicht (43 und 44) befindet.

10. System nach einem der Ansprüche 1 bis 8, **dadurch gekennzeichnet, daß** die Zwischenschicht (45) mit der Innen- und der Außenschicht (43 und 44) verbunden ist.

**11.** System nach Anspruch 10, **dadurch gekennzeichnet, daß** die Stärke der Haftung zwischen der Zwischenschicht (45) und der halbleitenden Außenschicht (44) die gleiche Größenordnung aufweist wie Eigenfestigkeit des Materials der Zwischenschicht (45).

**12.** System nach Anspruch 10 oder 11, **dadurch gekennzeichnet, daß** die Schichten (43-45) durch Extrudieren miteinander verbunden sind.

**13.** System nach Anspruch 12, **dadurch gekennzeichnet, daß** die Innen- und die Außenschicht (43 und 44) aus halbleitendem Material und die isolierende Zwischenschicht (45) durch eine Mehrschichtextrusionsdüse über dem leitenden Mittel aufgetragen werden.

**14.** System nach einem der vorhergehenden Ansprüche, **dadurch gekennzeichnet, daß** die Innenschicht (43) aus einem ersten Kunststoffmaterial mit darin verteilten ersten stromleitenden Teilchen besteht, wobei die Außenschicht (44) aus einem zweiten Kunststoffmaterial mit darin verteilten zweiten stromleitenden Teilchen besteht und die Zwischenschicht (45) aus einem dritten Kunstoffmaterial besteht.

**15.** System nach Anspruch 15, **dadurch gekennzeichnet, daß** das erste, zweite und dritte Kunststoffmaterial einen Ethylen-Butylacrylat-Copolymer-Kautschuk, einen EPDM-Kautschuk, einen EPR-Kautschuk, LDPE, HDPE, PP, XLPE, EPR oder Silikonkautschuk umfassen.

**16.** System nach Anspruch 14 oder 15, **dadurch gekennzeichnet, daß** das erste, zweite und dritte Kunststoffmaterial mindestens im wesentlichen die gleichen Wärmeausdehnungskoeffizienten aufweisen.

**17.** System nach Anspruch 14, 15 oder 16, **dadurch gekennzeichnet, daß** das erste, zweite und dritte Kunststoffmaterial das gleiche Material sind.

**18.** System nach einem der vorhergehenden Ansprüche, **dadurch gekennzeichnet, daß** das elektrisch isolierende Mittel (42) für Hochspannung ausgelegt ist, geeigneterweise über 10 kV, insbesondere über 36 kV und bevorzugt über 72,5 kV bis zu sehr hohen Übertragungsspannungen wie etwa 400 kV bis 800 kV oder darüber.

**19.** System nach einem der vorhergehenden Ansprüche, **dadurch gekennzeichnet, daß** das elektrisch isolierende Mittel (42) für einen Leistungsbereich über 0,5 MW, bevorzugt über 30 MW und bis zu 1000 MW ausgelegt ist.

**20.** Leistungsflußsteuerung zum Steuern des Flusses elektrischer Leistung in einem Wechselstromübertragungssystem, das folgendes enthält: eine Übertragungsleitung (2) mit zwei Enden, die Wechselstrom mit einer ausgewählten Übertragungsleitungsspannung und einer Grundfrequenz zwischen den beiden Enden führt, **dadurch gekennzeichnet, daß** die Steuerung folgendes umfaßt: ein Hochspannungsdrehleistungskonvertermittel (1) mit einer im Nebenschluß an Leiter der Übertragungsleitung (2) angeschlossenen Wicklung zum Erzeugen einer Wechselspannung mit der Grundfrequenz mit steuerbarer Größe und steuerbarem Phasenwinkel relativ zur Übertragungsleitungsspannung, mindestens eine weitere Wicklung mit einem stromleitenden Mittel (41) und Koppelmittel zum Koppeln der mindestens einen weiteren Wicklung des Drehleistungskonvertermittels direkt in Reihe mit der Übertragungsleitung und ein elektrisch isolierendes Mittel (42), das das stromleitende Mittel umgibt, um das elektrische Feld bei Betrieb des Stromkonvertermittels zu begrenzen, und das folgendes umfaßt: eine Innenschicht (43) aus einem halbleitenden Material in elektrischem Kontakt mit dem stromleitenden Mittel, eine Außenschicht (44) aus halbleitendem Material auf einem gesteuerten elektrischen Potential entlang seiner Länge und eine Zwischenschicht (45) aus elektrisch isolierendem Material zwischen der Innen- und der Außenschicht (43 und 44).

**21.** Leistungsflußsteuerung nach Anspruch 20, **dadurch gekennzeichnet, daß** es weiterhin ein Steuermittel umfaßt zum Steuern der steuerbaren Größe und des steuerbaren Phasenwinkels der von dem Drehleistungskonvertermittel mit der Grundfrequenz erzeugten Wechselspannung zum Steuern des Leistungsflusses in der Übertragungsleitung.

**22.** Leistungsflußsteuerung nach Anspruch 21, **dadurch gekennzeichnet, daß** das Steuermittel die Wechselspannung selektiv auf eine Größe und einen Phasenwinkel relativ zur Übertragungsleitungsspannung steuert, um die wirksame Impedanz der Übertragungsleitung, den wirksamen Phasenwinkel zwischen Spannungen an den beiden Enden der Übertragungsleitung und die Größe der Übertragungsleitungsspannung einzeln und zusammen nachzustellen.

**23.** Leistungsflußsteuerung für mindestens eine Wechselstromübertragungsleitung (2), die folgendes umfaßt: ein erstes Hochspannungsdrehleistungskonvertermittel (1) mit Wechselstromanschlüssen, die direkt im Nebenschluß mit der mindestens einen Übertragungsleitung (2) geschaltet sind, mindestens ein zweites Hochspannungsdrehleistungskonvertermittel (3) mit Wechselstromanschlüssen, die direkt in Reihe mit der mindestens einen Übertragungsleitung geschaltet sind, um mindestens eine Wechselspannung dort hinein zu injizieren, und ein Wellenmittel (6) zum drehbaren Verbinden von Rotoren des ersten und zweiten Drehleistungskonvertermittels, wobei jedes der Drehleistungskonvertermittel folgendes enthält: mindestens eine Wicklung mit einem stromleitenden Mittel (41) und einem elektrisch isolierenden Mittel (42), das das stromleitende Mittel umgibt, um das elektrische Feld bei Betrieb des Stromkonvertermittels zu begrenzen, und das folgendes umfaßt: eine Innenschicht (43) aus einem halbleitenden Material in elektrischem Kontakt mit dem stromleitenden Mittel, eine Außenschicht (44) aus halbleitendem Material auf einem gesteuerten elektrischen Potential entlang seiner Länge und eine Zwischenschicht (45) aus elektrisch isolierendem Material zwischen der Innen- und der Außenschicht (43 und 44).

**24.** Stromflußsteuerung nach Anspruch 23, **dadurch gekennzeichnet, daß** es weiterhin ein Steuermittel umfaßt zum Steuern des ersten und zweiten Drehleistungskonvertermittels zum Steuern des Leistungsflusses durch die mindestens eine Übertragungsleitung.

**25.** Stromflußsteuerung nach Anspruch 24, **dadurch gekennzeichnet, daß** das Steuermittel aktiven und reaktiven Leistungsaustausch zwischen der mindestens einen Übertragungsleitung und dem ersten Drehleistungskonvertermittel steuert, um Wirkleistung für das mindestens eine zweite Drehleistungskonvertermittel mit mindestens einem ausgewählten Leistungsfaktor zuzuführen, wobei das Steuermittel auch das mindestens eine zweite Drehleistungskonvertermittel steuert, um folgendes zu erzeugen: die mindestens eine Wechselspannung mit einer oder mehreren ausgewählten Größen und einem oder mehreren ausgewählten Phasenwinkeln zwischen 0° und 360°, um mindestens eine Übertragungsleitungsspannung festzulegen, mindestens einen ausgewählten Übertragungswinkel und mindestens eine Übertragungsleitungsspannung zum Steuern des Leistungsflusses durch die mindestens eine Übertragungsleitung.

**26.** Verfahren zum Steuern des Stromflusses zwischen zwei durch mindestens eine Stromleitung (2) verbundenen Leistungssystemen, das folgendes umfaßt: direktes Schalten eines ersten Drehleistungskonvertermittels (1) im Nebenschluß mit der mindestens einen Stromleitung; direktes Schalten mindestens eines zweiten Drehleistungskonvertermittels (3) in Reihe mit der mindestens einen Stromleitung und Anschließen des ersten und zweiten Drehleistungskonvertermittels mit Hilfe einer gemeinsamen Welle (6).

**27.** Verfahren nach Anspruch 26, **dadurch gekennzeichnet, daß** das oder jedes Drehleistungskonvertermittel (1, 3) einen Stator, einen Rotor und mindestens eine Wicklung aufweist, die ein stromleitendes Mittel und ein umgebendes elektrisch isolierendes Mittel aufweist, und daß das elektrisch isolierende Mittel aus massivem Material besteht, um das elektrische Feld bei Betrieb des Leistungskonvertermittels zu begrenzen.

**Revendications**

**1.** Système de transmission et/ou de distribution d'énergie comportant au moins une ligne de transport d'énergie (2) reliant deux parties du système et au moins un moyen convertisseur de courant tournant haute tension (3) relié au système pour réguler le flux d'énergie dans le système et comportant au moins un enroulement comprenant un moyen électriquement conducteur (41), **caractérisé en ce que** ledit au moins un moyen convertisseur de courant tournant comprend une première machine électrique tournante (3) reliée en dérivation à ladite au moins une ligne de transport d'énergie et au moins une deuxième machine électrique tournante (1) reliée directement, par une liaison sans transformateur, en série à ladite au moins une ligne de transport d'énergie, et **en ce que** ledit moyen électriquement conducteur (41) comprend un moyen électriquement isolant périphérique (42) pour confiner le champ électrique lors de l'utilisation du moyen convertisseur de courant, comprenant une couche interne (43) de matériau semiconducteur au contact électrique dudit moyen électriquement conducteur, une couche externe (44) de matériau semiconducteur à un potentiel électrique régulé sur sa longueur et une couche intermédiaire (45) de matériau électriquement isolant entre lesdites couchés interne et externe (43 et 44).

**2.** Système selon la revendication 1, **caractérisé en ce que** des moyens réactifs sont montés en parallèle avec ladite première machine électrique tournante.

**3.** Système selon la revendication 1 ou 2, **caractérisé en ce que** ladite première machine électrique tournante comprend un autotransformateur alimentant une réseau de distribution d'énergie supplémentaire.

4. Système selon l'une quelconque des revendications précédentes, **caractérisé en ce que** la couche semiconductrice externe (44) présente une résistivité comprise entre 1 et 105 ohm..cm, de préférence entre 10 et 500 ohm. cm, et le plus préférablement de 10 à 100 ohm.cm.

5. Système selon l'une quelconque des revendications précédentes, **caractérisé en ce que** la résistance par unité de longueur axiale de la couche semiconductrice externe (44) est comprise entre 5 et 50 000 ohm.m$^{-1}$.

6. Système selon l'une quelconque des revendications précédentes, **caractérisé en ce que** la résistance par unité de longueur axiale de la couche semiconductrice externe (44) est comprise entre 500 et 25 000 ohm.m$^{-1}$, de préférence entre 2 500 et 5 000 ohm.m$^{-1}$.

7. Système selon l'une quelconque des revendications précédentes, **caractérisé en ce que** la couche semiconductrice externe (44) est au contact de moyens conducteurs audit potentiel électrique régulé au niveau de régions espacées sur sa longueur, des régions de contact adjacentes étant suffisamment rapprochées pour que les tensions de points médians entre des régions de contact adjacentes soient insuffisantes pour provoquer des décharges en couronne dans le moyen électriquement isolant.

8. Système selon l'une quelconque des revendications précédentes, **caractérisé en ce que** ledit potentiel électrique régulé est au potentiel de la masse ou proche de celui-ci.

9. Système selon l'une quelconque des revendications précédentes, **caractérisé en ce que** ladite couche intermédiaire (45) est en contact mécanique rapproché avec chacune desdites couches interne et externe (43 et 44).

10. Système selon l'une quelconque des revendications 1 à 8, **caractérisé en ce que** ladite couche intermédiaire (45) est unie à chacune desdites couches interne et externe (43 et 44).

11. Système selon la revendication 10, **caractérisé en ce que** la force d'adhérence entre ladite couche intermédiaire (45) et la couche semiconductrice externe (44) est du même ordre de grandeur que la résistance intrinsèque du matériau de la couche intermédiaire (45).

12. Système selon la revendication 10 ou 11, **caractérisé en ce que** lesdites couches (43-45) sont unie ensemble par extrusion.

13. Système selon la revendication 12, **caractérisé en ce que** les couches interne et externe (43 et 44) de matériau semiconducteur et la couche isolante intermédiaire (45) sont appliquées ensemble sur le moyen conducteur (41) par une filière d'extrusion multicouche.

14. Système selon l'une quelconque des revendications précédentes, **caractérisé en ce que** ladite couche interne (43) comprend une première matière plastique dans laquelle sont dispersées des premières particules électriquement conductrices, ladite couche externe (44) comprend une deuxième matière plastique dans laquelle sont dispersées des deuxièmes particules électriquement conductrices, et ladite couche intermédiaire (45) comprend une troisième matière plastique.

15. Système selon la revendication 15, **caractérisé en ce que** chacune desdites première, deuxième et troisième matières plastiques comprend un caoutchouc de copolymère éthylène-acrylate de butyle, un caoutchouc de monomères éthylène-propylène-diène (EPDM), un caoutchouc de copolymère propylène-éthylène (EPR), un LDPE, un HDPE, un PP, un XLPE, un EPR ou un caoutchouc siliconé.

16. Système selon la revendication 14 ou 15, **caractérisé en ce que** lesdites première, deuxième, troisième matières plastiques présentent au moins sensiblement les mêmes coefficients de dilatation thermique.

17. Système selon la revendication 14, 15 ou 16, **caractérisé en ce que** lesdites première, deuxième et troisième matières plastiques sont identiques.

18. Système selon l'une quelconque des revendications précédentes, **caractérisé en ce que** le moyen électriquement isolant (42) est conçu pour les hautes tensions, commodément supérieures à 10 kV, en particulier supérieures à 36 kV, et de préférence supérieures à 72,5 kV, jusqu'à de très hautes tensions de transmission telles que 400 kV à 800 kV, voire davantage.

19. Système selon l'une quelconque des revendications précédentes, **caractérisé en ce que** le moyen électriquement isolant (42) est conçu pour une plage de puissances dépassant 0,5 MVA, de préférence dépassant 30 MVA et allant jusqu'à 1 000 MVA.

20. Régulateur de flux d'énergie pour réguler le flux d'énergie électrique dans un système de transmission de courant alternatif comportant une ligne de transmission (2) présentant deux extrémités et transportant un courant alternatif à une tension de ligne de transmission et une fréquence fondamentale sélectionnées entre lesdites deux extrémités, **caractérisé en ce que** le régulateur comprend un moyen convertisseur de courant tournant haute tension (1) comportant un enroulement relié en dérivation à des conducteurs de ladite ligne de transmission (2) pour générer une tension alternative à ladite fréquence fondamentale avec une amplitude et un angle de phase réglables par rapport à ladite tension de ligne de transmission, au moins un autre enroulement comprenant un moyen électriquement conducteur (41), et un moyen de couplage pour coupler ledit au moins un autre enroulement dudit moyen convertisseur de courant tournant directement en série à ladite ligne de transmission, et un moyen électriquement isolant (42) enveloppant ledit moyen électriquement conducteur pour confiner le champ électrique lors de l'utilisation du moyen convertisseur de courant et comprenant une couche interne (43) de matériau semiconducteur au contact électrique dudit moyen électriquement conducteur, une couche externe (44) de matériau semiconducteur à un potentiel électrique régulé sur sa longueur et une couche intermédiaire (45) de matériau électriquement isolant entre lesdites couches interne et externe (43 et 44).

21. Régulateur de flux d'énergie selon la revendication 20, **caractérisé en ce qu'**il comprend en outre un moyen de réglage pour régler l'amplitude et l'angle de phase réglables de la tension alternative générée par ledit moyen convertisseur de courant tournant à ladite fréquence fondamentale pour réguler le flux d'énergie dans ladite ligne de transmission.

22. Régulateur de flux d'énergie selon la revendication 21, **caractérisé en ce que** ledit moyen de réglage règle ladite tension alternative à une amplitude et un angle de phase par rapport à ladite tension de ligne de transmission de façon sélective afin d'ajuster, de façon individuelle et coordonnée, l'impédance effective de la ligne de transmission, l'angle de phase effectif entre des tensions auxdites deux extrémités de la ligne de transmission et l'amplitude de la tension de ligne de transmission.

23. Régulateur de flux d'énergie pour au moins une ligne de transmission à courant alternatif (2), comprenant un premier moyen convertisseur de courant tournant haute tension (1) comprenant des bornes à courant alternatif reliées directement en dérivation à ladite au moins une ligne de transmission (2), au moins un deuxième moyen convertisseur de courant tournant haute tension (3) comprenant des bornes à courant alternatif reliées directement en dérivation à ladite au moins une ligne de transmission afin d'y injecter au moins une tension alternative, et un moyen formant arbre (6) pour relier à rotation les rotors desdits premier et deuxième moyens convertisseurs de courant tournants, chacun desdits moyens convertisseurs de courant tournants comportant au moins un enroulement comprenant un moyen électriquement conducteur (41) et un moyen électriquement isolant (42) enveloppant ledit moyen électriquement conducteur pour confiner le champ électrique lors de l'utilisation du moyen convertisseur de courant et comprenant une couche interne (43) de matériau semiconducteur au contact électrique dudit moyen électriquement conducteur, une couche externe (44) de matériau semiconducteur à un potentiel électrique régulé sur sa longueur et une couche intermédiaire (45) de matériau électriquement isolant entre lesdites couches interne et externe (43 et 44).

24. Régulateur de flux d'énergie selon la revendication 23, **caractérisé en ce qu'**il comprend en outre un moyen de commande pour commander lesdits premier et deuxième moyens convertisseurs tournants pour réguler le flux d'énergie à travers ladite au moins une ligne de transmission.

25. Régulateur de flux d'énergie selon la revendication 24, **caractérisé en ce que** ledit moyen de commande commande l'échange d'énergie active et réactive entre ladite au moins une ligne de transmission et ledit premier moyen convertisseur de courant tournant pour fournir de la puissance active pour ledit au moins un deuxième moyen convertisseur de courant tournant à au moins un facteur de puissance sélectionné, ledit moyen de commande commandant également ledit au moins un deuxième moyen convertisseur de courant tournant en vue de générer ladite au moins une tension alternative avec une (des) amplitude(s) sélectionnée(s) et un (des) angle(s) de phase sélectionnés compris entre 0° et 360° en vue d'établir au moins une tension de ligne de transmission, au moins un angle de ligne de transmission et au moins une tension de ligne de transmission pour réguler le flux d'énergie à travers ladite au moins une ligne de transmission.

26. Procédé de régulation su flux d'énergie entre deux systèmes de distribution d'énergie reliés par au moins une ligne de transport d'énergie (2), comprenant la mise en liaison d'un premier moyen convertisseur de courant tournant (1) directement en dérivation à ladite au moins une ligne de transport d'énergie, la mise en liaison d'au moins un deuxième convertisseur de courant tournant (3) directement en série à ladite au moins une ligne de transport d'énergie, et la mise en liaison des premier et deuxième moyens convertisseurs de courant tournants au moyen d'un arbre commun (6).

27. Procédé selon la revendication 26, **caractérisé en ce que** le ou chacun desdits moyen(s) convertisseur(s) de courant tournant(s) (1, 3) comprend un stator, un rotor et au moins un enroulement comprenant un moyen électriquement conducteur et un moyen électriquement isolant enveloppant, et **en ce que** le moyen électriquement isolant comprend un matériau massif pour confiner le champ électrique lors de l'utilisation du (des) moyen(s) convertisseur(s) de courant.

## FIG. 1

Principal overview of power controllers

# FIG. 2

Voltage
Regulation

Series
Compensation

Phase Angle
Regulation

Multi-Function
Power Flow Control.

$V_o + \Delta V_o$

$V_o$

(a)

$V_c$

$V_o$

$V_o + V_c$

$I$

(b)

$V_c$

$V_o$

$V_c + V_o$

(c)

$\Delta V_o$

$V_c$

$V_e$

$V_o$

$V_o + \Delta V_o + V_c + V_e$

(d)

# FIG. 3

19000 MW
3100 MVAr

15000 MW
3000 MVAr

345 kV

138 kV

Ref. bus

Power Flow
Controller:
UPFC or MPTC
or Invention

$P_D + jQ_D$

100 MW
45 MVAr

# FIG. 4

ac

ac

dc

dc

UPFC

FIG. 5

$\bar{E}_l$   $\bar{E}_i$

a   $i$   $\bar{E}_{3+}$

b

c

$\bar{V}_{ab}$

$\bar{V}_a$

$\bar{V}_b$

$\bar{V}_c$

$\bar{V}_{ca}$   $\bar{V}_{bc}$

FIG. 6

MPTC

FIG. 7

$\bar{E}_l$   $\bar{E}_i$

a   $i$   $E_{3+}$ | LOAC

b

c

$\bar{V}_{ab}$

$\bar{V}_a$

$\bar{V}_{ca}$

$\bar{V}_c$   $\bar{V}_b$

$\bar{V}_{bc}$

Static VAR
Compensation

FIG. 8

2
30 HV
System 1
Transm. Line to System 2
3
7
1
6
7

FIG. 9

30 HV
System 1 a
b
Transm. Line to System 2
5
c
Transm. Line to System 3
5
6
1
7

FIG. 10

42
44
45
40
43
41